# EUROPEAN PATENT APPLICATION

(11) **EP 1 997 861 A2**
(43) Date of publication of application: **03.12.2008**
(21) Application number: 08251667.5
(22) Date of filing: 12.05.2008
(51) Int. Cl.: C09J 7/00

(54) **Sealing tape**

(30) Priority: 11.05.2007 GB 0709104
(71) Applicant: Tyco Electronics UK Limited, Swindon, Wiltshire SN3 5HH (GB)
(72) Inventor: Pearce, David, Wootton Bassett Wiltshire SN4 8JJ (GB)
(74) Representative: Marshall, Caroline

(57) **Abstract**

A sealing tape (10) for a cold-applied joint in a pair of cables where at least one of the cables is a paper-insulated lead cable (PILC) including paper insulation impregnated with oil. The sealing tape (10) comprises an inner layer (12) carried on an outer layer (14). The inner layer (12) includes a deformable oil-barrier material to form a seal about a joint, the seal being resistant to chemical attack from oil and resistant to migration of oil therethrough. The outer layer (14) includes a relatively rigid material to form a protective sleeve about the seal, the protective sleeve resisting deformation and expansion of the inner layer (12) that results from expansion of oil in the paper insulation.

## Description

The invention relates to sealing tape for cable joints, especially those involving the splicing together of two cables at least one of which is of the paper-insulated lead cable (herein "PILC") type. A PILC typically finds application in the transmission of electric current at so-called "medium" voltages i.e. up to approximately 20,000 volts.

In this type of cable an inner conducting core made e.g. of twisted strands of a conducting metal is surrounded along the length of the cable by a cylindrical layer of paper that is impregnated with an oil. This layer is in turn surrounded along the length of the cable by a lead (or other conducting material) jacket or sleeve. The impregnated paper layer acts as a dielectric that insulates the inner conductor from the outer (conductive) jacket.

PILC's are rarely manufactured nowadays, but many tens of thousands of metres of the cable type remain in service around the world. Therefore there remains a need for connecting PILC's together, and for connecting PILC's to other types of cable.

One characteristic of a PILC is that if migration of the oil occurs the dielectric effect of the impregnated paper diminishes dramatically as the paper dries out. Generally this migration effect does not occur over the length of the cable that lies away from the cable ends, but when it is required to splice an end of a PILC a potential problem arises in that-there exist leakage paths for the oil.

Prior art designs of cable joint for use with PILC's have sought to close off such leakage paths. This aim may be realised through the use of a rigid casing, of the kind described in GB-A-1 485 613, that encloses a joint assembly including various seals. The objecting of including seals is to prevent deleterious migration of the oil from the paper layer.

The arrangement of GB-A-1 485 613 however is complicated. Aside from the fact that this makes the joint expensive to manufacture, assembly of the joint is a lengthy process the steps of which must be completed in the correct order in order to assure leak-proofing of the joint. If the joint is assembled in a "field" situation by an inexperienced fitter therefore there is a danger of the steps not being completed correctly or in the correct order, such that the joint fails in service. Similarly if even one of the many components of the GB-A-1 485 613 joint becomes lost or damaged the integrity of the joint is compromised.

Yet a further problem with the joint of GB-A-1 485 613 is that it does not seek to address the problems that can arise when the heating effect of electrical resistance in the cable of a PILC causes expansion of the oil of the impregnated paper.

Under such circumstances the pressure of oil within a joint can rise sufficiently that the oil is forced to leak away, thereby reducing the dielectric effect as aforesaid.

High oil pressures can also arise when the cable contacting the joint lines e.g. on a hillside. The hydraulic head of oil above the joint can then be adequate to promote the above-described migration of oil.

US-A-5,374,784 proposes an arrangement in which the joint between two conducting elements of cables that are spliced together are encircled by an elastomeric sleeve. A heat-recoverable sleeve (i.e. a sleeve made of a material that is pre-stressed to a fitment shape and that on heating reverts to a relaxed or "recovered" state that differs in shape from the fitment shape) is then used to surround the elastomeric sleeve. On heating the heat-recoverable sleeve shrinks to encircle the elastomeric member sufficiently tightly that oil cannot migrate into its interstices. Consequently the oil cannot enter into the material of the sleeve and a known effect of degradation of the sleeve does not, according to the disclosure of US-A-5,374,784, occur.

The arrangement of US-A-5,374,784 however suffers from several disadvantages.

Firstly among these the effect of the heat-recoverable sleeve is only of benefit while the pressure of the oil remains low. At higher pressures the oil can force the elastomeric sleeve away from the joint and create voids. The oil can migrate into the voids and thereby cause failure of the insulation.

Secondly of course it is necessary for anyone fitting the joint of US-A-5,374,784 in a "field" situation to carry a source of heat for heating the heat-recoverable sleeve. The need to carry such equipment has safety ramifications and generally complicates the process of creating a joint.

JP-A-2000236619 discloses an arrangement in which an aluminium tape is used in conjunction with a complex structure in order to block oil leakage paths in the joint. A defect of this arrangement is that it is almost entirely rigid. Hence it does not allow for small movements of the parts of the joint without the integrity of the joint becoming compromised. This in turn leads to failure of the dielectric layer in service.

According to a first aspect of the invention there is provided sealing tape for a cold-applied joint in a pair of cables where at least one of the cables is a paper-insulated lead cable (PILC) including paper insulation impregnated with oil, the sealing tape comprising an inner layer carried on an outer layer, the inner layer including a deformable oil-barrier material to form a seal about a joint, the seal being resistant to chemical attack from oil and resistant to migration of oil therethrough, and the outer layer including a relatively rigid material to form a protective sleeve about the seal, the protective sleeve resisting deformation and expansion of the inner layer that results from expansion of oil in the paper insulation.

In use, the outer layer of the sealing tape provides external protection against mechanical abrasion and cutting, and provides an external hoop stress that prevents the inner layer from deforming under internal pressure resulting from expansion of oil in the paper insulation.

The combination of the inner and outer layers provides a quick and simple means of sealing a joint between two cables, where at least one of the cables is a paper-insulated lead cable, providing both chemical and mechanical protective functions in a single step. No additional components, such as a heat source for example, are required, the provision of the outer layer rendering separate outer tubing, either hot- or cold-applied, unnecessary.

The outer layer preferably takes the form of an elastic tape or a fabric-reinforced tape exhibiting a predetermined degree of stretch, thereby rendering the outer layer sufficiently flexible to allow the tape to be wrapped about a joint whilst ensuring that the outer layer is sufficiently rigid to prevent, in use, deformation and expansion of the inner layer that results from expansion of oil in the insulation paper.

Examples of material from which an elastic tape may be formed include crosslinked, semi-crosslinked or high molecular weight elastomer-based materials selected from butyl, EPDM, epichlorohydrin, nitrile, silicone, fluorosilicone, thermoplastic vulcanisate rubber and other TPV's.

Examples of a fabric-reinforced tape include a loose-weave fabric coated in an elastomer or a polypropylene fibre net coated in an elastomer. In such embodiments, the elastomer may be silicone rubber.

The inner layer preferably takes the form of a sealing mastic material. Such materials have been proven to provide the required resistance to chemical attack from oil required for use with paper-insulated lead cable.

The formulation of the sealing mastic material is preferably based on an oil-barrier elastomer, which may be selected from epichlorhydrin, nitrile, fluorosilicone, polychloroprene and other fluoro-elastomers.

In a particularly preferred embodiment, the width of the inner layer is greater than the width of the outer layer such that the inner layer extends from either side of the outer layer. This arrangement allows the inner layer, in use, to form a continuous layer when it is wrapped around a joint, and thereby provide a complete oil seal about the joint.

In other embodiments, the widths of the inner and outer layers may be the same such that the inner and outer layers are coextensive. In such embodiments, the inner layer spreads during the step of wrapping the tape around a joint so as to form a continuous layer about the joint and thereby provide a complete oil seal.

According to a second aspect of the invention there is provided a cold-applied joint for a paper-insulated lead cable (PILC) including paper insulation impregnated with oil the joint comprising at least a first PILC having an inner conducting element that is conductingly secured to the inner conducting element of a further cable and a length of sealing tape wrapped around the junction between the inner conducting elements, the sealing tape including an inner layer carried on an outer layer, the inner layer including a deformable oil-barrier material forming a seal about the junction between the inner conducting elements, the seal being resistant to chemical attack from oil and resistant to migration of oil therethrough, and the outer layer including a relatively rigid material forming a protective sleeve about the seal, the protective sleeve resisting deformation and expansion of the inner layer that results from expansion of oil in the paper insulation.

According to a third aspect of the invention there is provided a method of assembling a cold-applied joint for a PILC, the method comprising the steps of:
(a) conductingly securing an inner conducting element of a PILC to an inner conducting element of a further cable;
(b) wrapping a length of sealing tape including an inner layer carried on an outer layer, the inner layer including a deformable oil-barrier material and the outer layer including a relatively rigid material, about the junction between the inner conducting elements such that the inner layer of the sealing tape forms a seal about the junction, the seal being resistant to chemical attack from oil and resistant to migration of oil therethrough, and the outer layer of the sealing tape forms a protective sleeve about the seal, the protective sleeve resisting deformation and expansion of the inner layer that results from expansion of oil in the paper insulation.

Embodiments of the invention will now be described, by way of non-limiting examples, with reference to the accompanying drawings in which:
Figure 1 shows a cross-sectional view of a sealing tape according to an embodiment of the invention;
Figure 2 shows a perspective view of the sealing tape of Figure 1; and
Figure 3 shows a cross-sectional view of a sealing tape according to another embodiment of the invention.

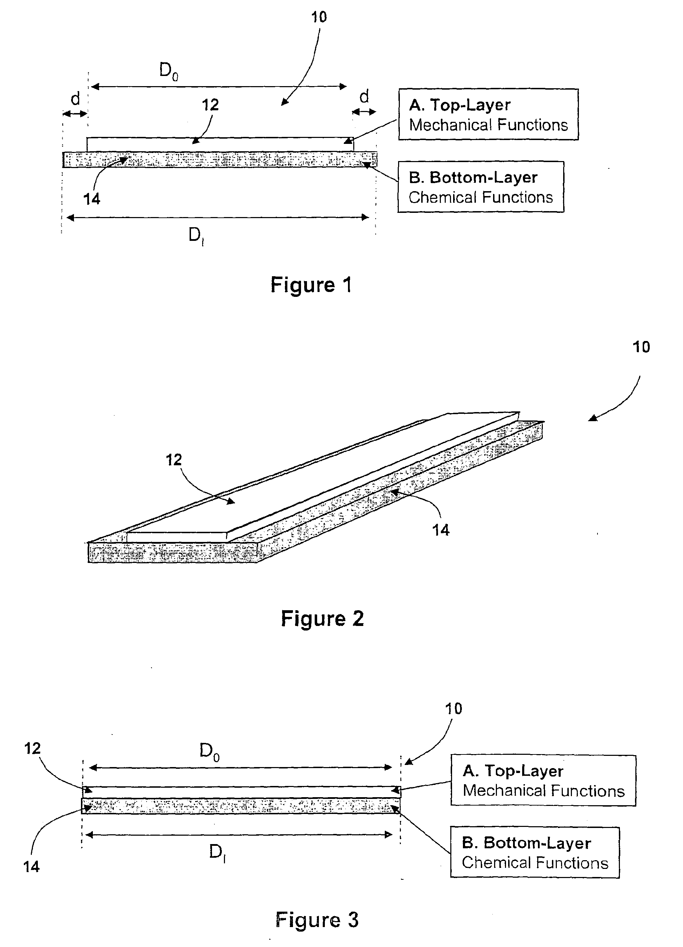

Sealing tape 10 according to an embodiment of the invention is shown in Figures 1 and 2.

The sealing tape 10 includes an inner layer 12 carried on an outer layer 14. The inner layer 12 includes a deformable oil barrier material and the outer layer 14 includes a relatively rigid material.

The deformable oil barrier material is preferably a sealing mastic material, and the relatively rigid material is preferably an elastic or fabric-based tape exhibiting a predetermined degree of stretch.

In the embodiment shown in Figures 1 and 2, the inner and outer layers 12,14 are formed from materials having the specific formulations identified in Tables 1 and 2.

In Tables 1 and 2 "PHR" represents parts per hundred rubber.

**Table 1**

| Material for inner layer | | PHR |
|---|---|---|
| | | |
| polyepichlorohydrin copolymer elastomer | | 100 |
| (with ~26%wt chlorine and Mooney viscosity 65-75) | | |
| liquid nitrile rubber | | 35-45 |
| (with Brookfield viscosity of 20,000 - 40,000cP) | | |
| pentaerythritol-based hindered phenol antioxidant | | 2-5 |
| (with a melting point in the range of 110-115°C) | | |
| magnesium oxide | | 3-6 |
| fumed silica | | 25-35 |
| (with a surface area of approximately 200m²g⁻¹) | | |
| C10-C13 chlorinated paraffin | | 90-100 |
| (with 60-71 % chlorination) | | |
| N990-type thermal black carbon | | 5-15 |

**Table 2**

| Material for outer layer | | PHR |
|---|---|---|
| | | |
| high molecular weight polyisobutylene | | 100 |
| (with an average molecular weight of 2,110,000) | | |
| low molecular weight polyisobutylene | | 25-45 |
| (with an average molecular weight of 40,000) | | |
| carboxylated nitrile rubber | | 10-15 |
| (with Mooney viscosity of 40-55) | | |
| titanium dioxide | | 80-120 |
| N550-type carbon black | | 5-15 |
| octodecyl-based hindered phenol antioxidant | | 0.5-1.0 |
| (with a melting point in the range 49-54°C) | | |

In other embodiments the inner layer 12 may be formed from a sealing mastic material based on other oil-barrier elastomers such as, for example, nitrile, fluorosilicone, polychloroprene and other fluoro-elastomers.

In such embodiments, the outer layer 14 may be a tape formed from crosslinked, semi-crosslinked or high molecular weight elastomer-based materials selected from butyl, EPDM, epichlorohydrin, nitrile, silicone, fluorosilicone, thermoplastic vulcanisate rubber and other TPV's, or a tape formed from a loose-weave fabric coated in an elastomer or a polypropylene fibre net coated in an elastomer. In such embodiments the elastomer may be silicone rubber.

In the embodiment shown in Figures 1 and 2, the width D_{I} of the inner layer 12 is greater than the width Dₒ of the outer layer 14 such that the inner layer 12 extends a distance d from either side of the outer layer 14.

The sealing tape 10 is used during the assembly of a cold-applied joint for a paper-insulated lead cable (PILC) in which the inner conducting element of a PILC is conductingly secured to the inner conducting element of another cable in the form of a PILC or another type of medium voltage cable.

The sealing tape 10 is wrapped around the junction between the cables such that the sealing tape 10 overlies each of the cables in the vicinity of the junction between the inner conducting elements of the respective cables with the inner layer 12 in contact with the cables.

The width D_{I} of the inner layer 12 relative to the width Do of the outer layer 14 ensures that the inner layer 12 forms a continuous layer about the junction and thereby forms a complete seal about the junction which is resistant to chemical attack from oil in the paper insulation. It is also resistant to migration of the oil therethrough.

The outer layer 14 forms an outer protective sleeve about the inner layer 12. The outer layer 14 of the sealing tape 10 thereby provides external protection against mechanical abrasion and cutting.

As explained hereinabove, a known phenomenon when paper-insulated lead cables operate at high temperature involves the expansion of oil in the insulating paper such that it could force a sealing element forming part of a joint away from the cables. The resulting voids can cause migration of oil out of the insulating paper such that the dielectric characteristic of the latter diminishes dramatically. When that happens failure of the joint is a distinct possibility.

The provision of the outer layer 14 of the sealing tape 10, which forms an outer protective sleeve about the inner layer 12, provides an external hoop stress that prevents the inner layer 12 from deforming under internal pressure resulting from expansion of oil in the paper insulation of the or each PILC. The protective sleeve provided by the outer layer 14 therefore maintains the seal created by the inner layer 12 and prevents leakage of oil from the paper insulation of the or each PILC.

It is envisaged that in other embodiments, such as the embodiment shown in Figure 3, the width D_{I} of the inner layer 12 may be the same as the width Dₒ of the outer layer 14 such that the inner and outer layer 12,14 are coextensive.

In such embodiments, the inner layer 12 spreads during the step of wrapping the sealing tape 10 around the junction between the cables so as to form a continuous layer about the cables and thereby provide a complete oil seal about the junction.

The use of the outer layer 14 as a carrier for the inner layer 12 renders it possible to apply the seal and create the outer protective sleeve in a single step. This contrasts with other previously known methods of sealing a joint which require the application of a sealing material, such as, for example, a mastic material, to the joint and then require the application of a separate sleeve or other protective element to prevent deformation of the mastic material.

As mentioned herein, the resultant joint between the cables created using the sealing tape 10 of the invention is *"cold-applied".* This means that there is no need for a heating step in order to seal the joint. This makes assembly of a large number of joints a particularly convenient exercise since the fitter needs only to wrap the sealing tape about each joint. No further finishing steps are needed. As a consequence the fitter can create a large number of joints during a working day.

## Claims

1. A sealing tape for a cold-applied joint in a pair of cables where at least one of the cables is a paper-insulated lead cable (PILC) including paper insulation impregnated with oil, the sealing tape comprising an inner layer carried on an outer layer, the inner layer including a deformable oil-barrier material to form a seal about a joint, the seal being resistant to chemical attack from oil and resistant to migration of oil therethrough, and the outer layer including a relatively rigid material to form a protective sleeve about the seal, the protective sleeve resisting deformation and expansion of the inner layer that results from expansion of oil in the paper insulation.

2. A sealing tape according to Claim 1 wherein the outer layer is in the form of an elastic tape.

3. A sealing tape according to Claim 2 wherein the elastic tape is formed from a crosslinked, semi-crosslinked or high molecular weight elastomer-based material selected from butyl, EPDM, epichlorohydrin, nitrite, silicone, fluorosilicone, thermoplastic vulcanisate rubber and other TPV's.

4. A sealing tape according to Claim 1 wherein the outer layer is in the form of a fabric-reinforced tape exhibiting a predetermined degree of stretch.

5. A sealing tape according to Claim 4 wherein the fabric-reinforced tape is a loose-weave fabric coated in an elastomer or a polypropylene fibre net coated in an elastomer.

6. A sealing tape according to Claim 5 wherein the elastomer is silicone rubber.

7. A sealing tape according to any preceding claim wherein the inner layer is in the form of a sealing mastic material.

8. A sealing tape according to Claim 7 wherein the formulation of the sealing mastic material is based on an oil-barrier elastomer.

9. A sealing tape according to Claim 8 wherein the oil-barrier elastomer is selected from epichlorhydrin, nitrile, fluorosilicone, polychloroprene and other fluoro-elastomers.

10. A sealing tape according to any preceding claim wherein the width of the inner layer is greater than the width of the outer layer such that the inner layer extends from either side of the outer layer.

11. A sealing tape according to any of Claims 1-9 wherein the widths of the inner and outer layers are the same such that the inner and outer layers are coextensive.

12. A cold-applied joint for a paper-insulated lead cable (PILC) including paper insulation impregnated with oil the joint comprising at least a first PILC having an inner conducting element that is conductingly secured to the inner conducting element of a further cable and a length of sealing tape according to any preceding claim wrapped around the junction between the inner conducting elements, the sealing tape including an inner layer carried on an outer layer, the inner layer including a deformable oil-barrier material forming a seal about the junction between the inner conducting elements, the seal being resistant to chemical attack from oil and resistant to migration of oil therethrough, and the outer layer including a relatively rigid material forming a protective sleeve about the seal, the protective sleeve resisting deformation and expansion of the inner layer that results from expansion of oil in the paper insulation.

13. A method of assembling a cold-applied joint for a PILC, the method comprising the steps of:
(a) conductingly securing an inner conducting element of a PILC to an inner conducting element of a further cable;
(b) wrapping a length of sealing tape according to any of Claims 1-10 and including an inner layer carried on an outer layer, the inner layer including a deformable oil-barrier material and the outer layer including a relatively rigid material, about the junction between the inner conducting elements such that the inner layer of the sealing tape forms a seal about the junction, the seal being resistant to chemical attack from oil and resistant to migration of oil therethrough, and the outer layer of the sealing tape forms a protective sleeve about the seal, the protective sleeve resisting deformation and expansion of the inner layer that results from expansion of oil in the paper insulation.

14. A sealing tape generally as herein described with reference to and/or as illustrated in the accompanying drawings.

15. A cold-applied joint generally as herein described with reference to and/or as illustrated in the accompanying drawings.

16. A method of assembling a cold-applied joint generally as herein described with reference to and/or as illustrated in the accompanying drawings.
